**Europäisches Patentamt**

**European Patent Office**

**Office européen des brevets**

(19)

(11) Numéro de publication: **0 185 039**
**B1**

(12) **FASCICULE DE BREVET EUROPEEN**

(45) Date de publication du fascicule du brevet:
08.02.89

(51) Int. Cl.⁴: **H 02 K 21/08,** H 02 K 1/28

(21) Numéro de dépôt: **85902557.9**

(22) Date de dépôt: **21.05.85**

(86) Numéro de dépôt international:
**PCT/FR 85/00121**

(87) Numéro de publication internationale:
**WO 85/05506 (05.12.85 Gazette 85/26)**

(54) **PERFECTIONNEMENT AUX MACHINES TOURNANTES A AIMANTS AU ROTOR.**

(30) Priorité: **23.05.84 FR 8408015**

(43) Date de publication de la demande:
**25.06.86 Bulletin 86/26**

(45) Mention de la délivrance du brevet:
**08.02.89 Bulletin 89/6**

(84) Etats contractants désignés:
**DE FR GB IT NL SE**

(56) Documents cités:
**WO-A-82/04505**
**DE-A- 3 224 904**
**FR-A- 908 689**
**GB-A- 1 492 691**
**US-A- 2 735 952**
**US-A- 3 077 026**
**US-A- 3 531 670**
**US-A- 4 117 360**

**Patents Abstracts of Japan, volume 8, no. 36, page (E-227)(1473), 16 février 1984, & JP A 58195460 (TOKYO SHIBAURA) 14 novembre 1983**
**Machine Design, volume 31, no. 7, 20 août 1959, Cleveland (US): "Sandwiched magnetic wafers", page 150**

(73) Titulaire: **PRECISION MECANIQUE LABINAL Société Anonyme:, 5 Avenue Newton Parc d'activités, F-78390 Bois d'Arcy (FR)**

(72) Inventeur: **LE CORRE, Loic, 35, avenue de l'Europe, F-92700 Colombes (FR)**
Inventeur: **ROLLAND, Albert, Lionel, 26, rue de la Jonquière, F-75017 Paris (FR)**

(74) Mandataire: **Lemoine, Michel et al, Cabinet Michel Lemoine et Bernasconi 13 Boulevard des Batignolles, F-75008 Paris (FR)**

## Description

La présente invention a trait à un perfectionnement aux machines tournantes à aimants au rotor et particulièrement aux machines à haute performance telles que des génératrices à très grande vitesse de rotation.

L'évolution de la technologie des génératrices de courant à haute performance conduit à réaliser des génératrices à aimants au rotor dans lesquelles les rotors sont amenés à tourner à de très grandes vitesses en étant par exemple directement en prise avec une turbine.

Pour des raisons d'encombrement et de performance, les solutions consistant à assurer une fixation mécanique des aimants se trouvent dépassées et on tend donc à utiliser des génératrices à aimants collés ou mieux à aimants brasés sur le rotor comme décrit par exemple dans la demande de brevet 83.11 325 déposée le 7 juillet 1983 au nom de la déposante. Néanmoins, lorsque l'on dépasse des vitesses de rotation conduisant à des vitesses tangentielles de plus de 100 mètres par seconde, par exemple 200 mètres par seconde, la sécurité de la fixation des aimants n'est plus assurée de sorte que de telles vitesses ne peuvent pas être atteintes dans la pratique.

Ceci est également le cas des machines à aimants fixés de façon classique sur le rotor et maintenus par un manchon faisant office de frette, manchon dont on cherche à éviter justement la présence en raison de l'importante augmentation de l'entrefer qu'il provoque et dont le comportement aux hautes vitesses de rotation ne contribue pas à la solidité et à la tenue du rotor.

La publication allemande DOS 3 224 904 décrit qu'il était connu d'entourer des rotors à aimants d'une frette amagnétique en un matériau tel que le titane, ce qui ne permet, cependant, pas d'atteindre des vitesses de rotation extrêmement élevées et conduit, en outre, à des frettes épaisses, lourdes et peu intéressantes du point de vue du comportement magnétique de l'ensemble. C'est pourquoi elle préconise la réalisation de frettes en acier à haute résistance, constituées d'un fourreau cylindrique précontraint par enfoncement de coins.

Cette solution présente, cependant, des inconvénients car les coins participent à la masse et l'épaisseur de la frette est localement accrue. La masse de la frette n'est pas constante sur sa longueur et la mise sous contrainte exige des charges radiales énormes qui entraînent fréquemment un grippage. En outre, cette solution nécessite l'insertion de matériaux magnétiques supplémentaire pour saturer partiellement les zones interpolaires de la frette pour éviter un court circuit magnétique sur le rotor, ce qui est une grande complication.

Une autre solution consiste à réaliser une frette constituée d'un fourreau en résine synthétique renforcée de fibres de carbone et à précontraindre le fourreau également par insertion de coins. Cette solution exclut, cependant, tout usage du dispositif dans des plages étendues de températures, non seulement en raison de la mauvaise tenue aux grandes variations de températures de la frette mais également ment des coefficients de dilatation différentielle qui entraînent une variation importante de la précontrainte de frettage suivant les températures.

Différents autres documents décrivent un frettage périphérique de rotors munis d'aimants permanents mais ne permettent pas l'obtention des vitesses de rotation élevées.

Ainsi, le brevet US 3 531 670 décrit une frette en métal amagnétique tel que l'Inconel fretté à chaud sur le rotor. Les vitesses de rotation permises sont faibles par rapport à ce qui est demandé dans les machines électriques modernes à aimants permanents. La mise en place d'une telle frette constituée d'un fourreau est, en outre, très délicate.

La demande de brevet japonais 57-78540 décrit une frette constituée d'un enroulement d'un fil métallique ferro-magnétique très épais et ne permet que l'obtention d'une faible vitesse de rotation si on la compare à celle de la demande de brevet allemand précitée.

Le brevet US 4 117 360 décrit une frette très épaisse et complexe pour un rotor à faible vitesse.

Le brevet US 3 077 026 décrit un rotor à vitesse de rotation lente entouré d'une frette complexe formée, aux deux extrémités, de parties annulaires réunies entre elles par des entretoises portant des lamelles discontinues. Une telle disposition n'autorise que des vitesses de rotation très faibles et présente une grande complexité pour une frette périphérique de grande épaisseur.

Le brevet US 2 735 952 décrit un rotor à aimants permanents entouré dune frette de très grande épaisseur constituée d'un empilage de rondelles destinées à recevoir des barres en cage d'écureuil pour un démarrage à la façon d'un moteur à induction. Une telle disposition est incapable d'être utilisée dans des machines tournantes électriques de haute performances à très grande vitesse de rotation.

La présente invention se propose de remédier à ces inconvénients et d'apporter un perfectionnement aux machines tournantes à aimants au rotor telles que par exemple des génératrices destinées à tourner à de très grandes vitesses de rotation et permettant de maintenir la cohésion du rotor même à ces très grandes vitesses.

Un autre objectif de l'invention est de fournir un tel perfectionnement qui soit de mise en œuvre simple et efficace.

Un autre objectif de l'invention est de forunir un tel perfectionnement qui apporte un degré très élevé de fiabilité.

Un autre objectif de l'invention est de fournir un tel perfectionnement qui permette au rotor de fonctionner sur une large gamme de température allant, par exemple, de −40 à +200°C.

Un autre objectif encore de l'invention est de fournir un tel perfectionnement qui soit de mise en œuvre simple et économique.

L'invention a pour objet une machine tournante à aimants au rotor destinée à tourner à des vitesses très élevées, notamment machine dont les aimants sont fixés au rotor par brasage ou collage et sont entourés d'une frette cylindrique de faible épaisseur, formant une chemise et exerçant un effort de précontrainte sur les aimants sousjacents, ladite frette étant réalisée en un matériau métallique amagnétique, caractérisé en ce que, dans le but de posséder une très faible épaisseur radiale, la frette est constituée soit d'un empilage de rondelles dont l'épaisseur, dans leur plan, est inférieure ou égale à 1 mm et dont la largeur radiale, déterminant l'épaisseur radiale de frette, est inférieure ou égale à 7 mm, lesdites rondelles étant empilées les unes sur les autres autour du rotor pour former un cylindre creux assemblé par emmanchement thermique autour du rotor, soit d'un enroulement sous tension d'une ou plusieurs bandes ayant une épaisseur inférieure ou égale à 1 mm, pour former plusieurs spires superposées déterminant une épaisseur de frette inférieure ou égale à 7 mm, les rondelles ou bandes étant réalisées en un matériau écroui de haute limitée élastique supérieure à $100 \ daN/mm^2$ et exerçant sur le rotor, et notamment les aimants, une précontrainte suffisamment importante pour empêcher, lors de la vitesse maximale de rotation du rotor, la possibilité géométrique d'un décollement des aimants d'avec la surface du rotor qui les porte.

De préférence, la résistance élastique du matériau écroui est égale à au moins 140, voire 200 $daN/mm^2$.

L'épaisseur de la frette est de préférence de l'ordre de 3 mm.

L'épaisseur du matériau lors de l'écrouissage est de préférence inférieure ou égale à 1 mm.

Un matériau particulièrement approprié peut être un matériau métallique dénommé Phynox vendu par la société française Metal Imphy et constitué d'un alliage ayant de l'ordre de 40 % Co, 20 % Cr, 16 % Ni, 7 % Mo et contenant également du fer, vendu par la société Imphy SA Paris.

Dans une première forme de réalisation de l'invention, la frette est constituée d'un empilage de rondelles de faible épaisseur et ayant une largeur radiale qui n'est, de préférence, pas supérieure à 1 mm, ces rondelles étant empilées les unes sur les autres autour du rotor pour former un cylindre creux assemblé par emmanchement thermique autour du rotor pour exercer sur le rotor une précontrainte suffisamment importante pour empêcher, lors de la vitesse maximale de rotation du rotor, la possibilité géométrique d'un décollement des aimants d'avec la surface du rotor qui les porte.

Dans une autre forme de réalisation de l'invention, la frette est constituée d'un enroulement d'une ou plusieurs bandes de faible épaisseur du matériau métallique de haute résistance, l'enroulement étant effectué dans des conditions qui provoquent l'effort de précontrainte recherché, suffisamment important pour empêcher, lors de la vitesse maximale du rotor, la possibilité géométrique d'un décollement des aimants.

L'invention a également pour objet des procédés de fabrication des rotors perfectionnés selon l'invention, comme revendiqué aux revendications 8 et 11.

Ainsi, pour réaliser le rotor selon la première forme de réalisation de l'invention, on écrouit une bande de métal de haute résistance puis l'on découpe dans la bande les rondelles ayant les diamètres intérieur et extérieur désirés. Ces rondelles sont éventuellement empilées à l'avance pour former un cylindre creux pouvant subir une rectification intérieure mais cette étape peut être omise si l'étape de fabrication de rondelles à partir de la bande est suffisamment précise.

L'empilage est ensuite chauffé par exemple à 500 °C, puis mis en place sur le rotor préalablement refroidi, par exemple par plongée dans l'azote liquide.

Le cas échéant, on peut ensuite assurer une rectification de la surface périphérique de la chemise ainsi réalisée par l'empilage de rondelles autour du rotor.

Pour réaliser une frette selon la deuxième forme de réalisation de l'invention, on peut, après avoir écroui une bande de métal à haute résistance comme précédemment, bande ayant de préférence la largeur prévue pour la frette, fixer une extrémité de la bande, par exemple par collage, sur le rotor, l'enrouler sur une certaine distance, par exemple un tour et demi, sans traction pour recouvrir la génératrice de démarrage sur laquelle la bande est collée, après quoi on continue à effectuer l'enroulement de la bande sous traction de façon à assurer l'effort de frettage, en retenant la bande, par exemple à travers des mâchoires d'un frein, et faisant tourner le rotor en cours de frettage, ceci de façon à obtenir le nombre de tours ou spires désiré en maintenant la précontrainte, après quoi on fixe la partie de bande devant former l'extrémité externe de la bande enroulée par un moyen quelconque tel que brasure, soudure, collage, agrafage etc.

D'autre avantages et caractéristiques de l'invention apparaîtront à la lecture de la description suivante, faite à titre d'exemple non limitatifs et se référant au dessin annexé dans lequel:

la figure 1 représente une vue schématique d'une partie d'une bande de métal dans laquelle une rondelle doit être découpée,

la figure 2 représente une vue en perspective de cette rondelle,

la figure 3 représente une vue de l'assemblage de rondelles avant introduction par emmanchement thermique du rotor,

la figure 4 représente une vue en élévation du rotor avec coupe au niveau de la frette de rondelles,

la figure 5 représente une vue schématique en perspective d'un rotor au début de l'enroulement d'une bande,

la figure 6 représente une vue de ce rotor après un enroulement d'un tour et demi,

la figure 7 représente une vue de ce rotor pendant l'enroulement de la bande sous précontrainte,

la figure 8 représente une vue de l'étape finale d'enroulement de la bande, et

la figure 9 représente une vue schématique en perspective d'un rotor avec la bande formant frette enroulée autour du rotor.

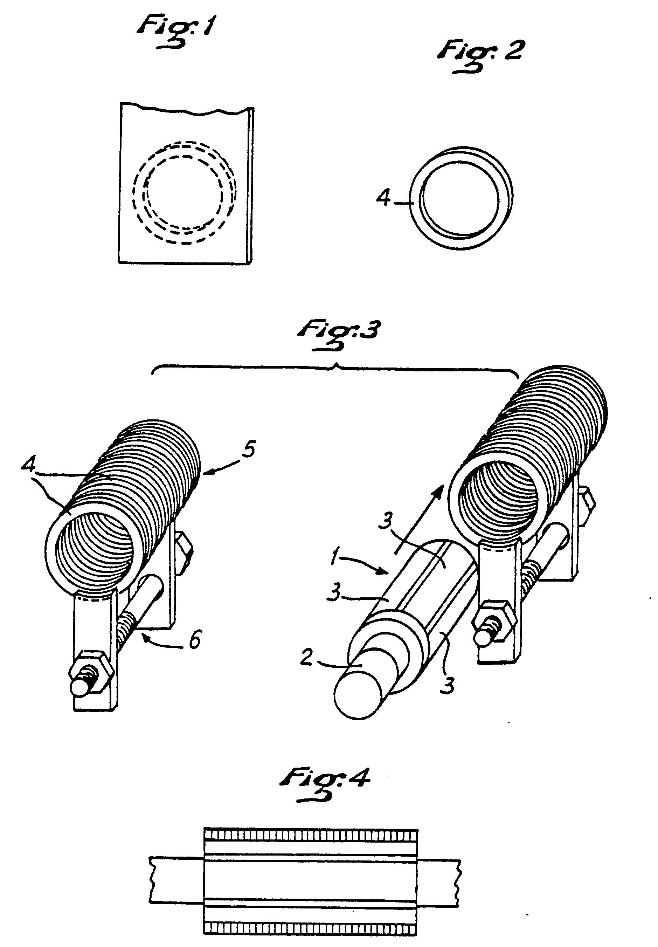

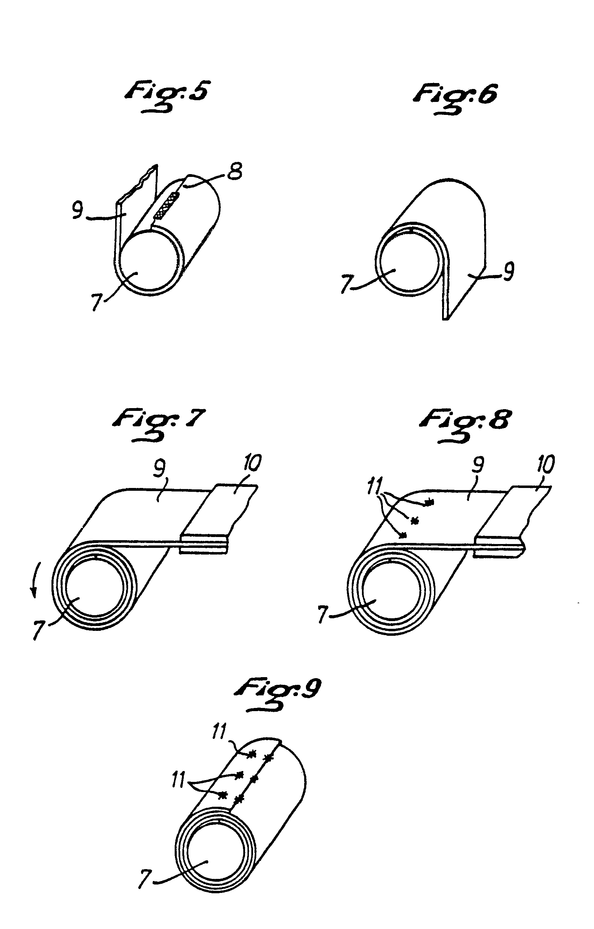

On se réfère tout d'abord aux figures 1 à 4.

On désire réaliser un rotor de génératrice 1 ayant un diamètre de 50 mm. Ce rotor présente des portées antérieure 2 et postérieure (non vue), la partie de rotor proprement dit présentant une pluralité d'aimants tangentiels, par exemple six aimants 3, formés de barres allongées à surface extérieure cylindrique, ces aimants 3 étant collés ou de préférence brasés par leur face non apparente sur des surfaces correspondantes du rotor lui-même.

Les aimants 3 sont avantageusement des aimants en terre rare, notamment en Sm Co$_5$, brasés sur le noyau en fer doux du rotor selon le procédé décrit dans la demande de brevet français précitée de la déposante.

On réalise, à partir d'une bande représentée sur la figure 1 et faite d'un matériau tel que le matériau vendu sous la dénomination Phynox vendu par la société précitée Metal Imphy présentant, après écrouissage à froid, une résistance élastique de 240 daN/mm$^2$, une pluralité de rondelles obtenues par découpage ou estampage.

L'épaisseur de la bande est par exemple de cinq dixièmes de millimètre.

On a représenté sur la figure 2 une telle rondelle présentant donc une épaisseur axiale de cinq dixièmes de millimètre, un diamètre interne de 50 mm et un diamètre externe de 58 mm.

On réalise alors un empilage cylindrique 5 formé par une pluralité de ces rondelle individuelles 4 et maintenu grâce à des moyens de fixation ou de serrage quelconques 6. Cet empilage est réalisé avec beaucoup d'exactitude et subit, si besoin, une passe de rectification intérieure de façon à former un passage cylindrique interne de diamètre voulu, par exemple 50 mm. Dans le cas où la précision de la fabrication par découpe des rondelles est suffisante, cette passe d'usinage peut être omise.

On plonge alors le rotor 1 dans l'azote liquide tandis que l'on chauffe l'empilage à 500°, puis on introduit le rotor par coulissement dans l'empilage de rondelles et on laisse les températures s'équilibrer. A la fin de cet emmanchement thermique, on obtient une précontrainte des rondelles sur le rotor de l'ordre de 800 N/mm$^2$. Cette précontrainte est suffisante pour empêcher une séparation radiale géométrique des aimants 3 d'avec la partie sous-jacente du rotor 1 à une vitesse de rotation de 90 000 tr/min.

S'il y a lieu, la surface extérieure de l'empilage des rondelles peut également être rectifiée, soit avant, soit après montage sur le rotor à aimants.

On se réfère maintenant aux figures 5 à 9 dans lesquelles on a représenté de façon schématique le rotor à aimants par un simple cylindre 7. On part cette fois-ci d'une bande du même matériau Phynox écroui ayant une épaisseur de 0,1 mm. On commence par fixer l'extrémité 8 de cette bande 9 le long d'une génératrice du rotor 7, par exemple par un ruban adhésif de très faible épaisseur. On effectue ensuite un enroulement dans traction d'un tour et demi, comme représenté sur la figure 6, de façon à recouvrir la génératrice ayant reçu l'extrémité de la bande 9.

On poursuit ensuite, comme on le voit sur la figure 7, l'enroulement en exerçant cette fois-ci une traction sur la bande, grâce par exemple à un frein 10 qui tend à s'opposer à l'enroulement de la bande sur le rotor 7 lui-même monté sur un mandrin tournant convenable. L'effort de traction est adapté à l'épaisseur et la largeur de la bande et à la précontrainte désirée et ceci peut être obtenu en réglant simplement le frein 10. Après avoir réalisé trente tours entiers, correspondant à une épaisseur d'enroulement de 3 mm, on arrête l'enroulement et on fixe la dernière spire de la bande sur la ou les spires sous-jacentes, par exemple par des points de soudure 11 formant un arrêt.

Au lieu de soudure, on peut utiliser tout autre moyen convenable tel que brasure, collage, agrafage etc., à condition de conférer à la liaison ainsi obtenue une résistance importante.

On découpe ensuite la bande entre la ligne formée par les points d'arrêts 11 et la mâchoire et on solidarise par de nouveaux points d'arrêt le bord extrême de la bande avec la spire sous-jacente, comme on le voit sur la figure 9.

On a ainsi réalisé une frette formée d'un enroulement d'une épaisseur moyenne de l'ordre de 3 mm exerçant une précontrainte de 1500 N/mm$^2$.

Les essais qui ont été effectués montrent que les rotors à aimants ainsi réalisés présentent la résistance requise à la rotation aux grandes vitesses et ceci dans des environnements difficiles, montant à des températures pouvant dépasser 200°C.

A titre d'exemple, on peut également réaliser un perfectionnement selon l'invention en utilisant, à la place du matériau PHYNOX, un alliage amagnétique écroui (hard) 41% Co, 26% Ni, 12% Cr et comprenant Be e Ti, dénommé DURATHERM et vendu par la société Vacuumschmelze GmbH, à Hanau, République Fédérale d'Allemagne, ce matériau ayant une limite élastique d'environ 140 daN/mm$^2$.

## Revendications

1. Machine tournante à aimants au rotor destinée à tourner à des vitesses très élevées, notamment machine dont les aimants sont fixés au rotor par brasage ou collage, et dont les aimants sont entourés d'une frette cylindrique de faible épaisseur, formant une chemise et exerçant un effort de précontrainte sur les aimants sous-jacents , ladite frette étant réalisée en un matériau métallique amagnétique, caractérisée en ce que, dans le but de posséder une très faible épaisseur radiale, la frette est constituée soit d'un empilage de rondelles (4) dont l'épaisseur, dans leur plan, est inférieur ou égale à 1 mm et dont la largeur radiale déterminant l'épaisseur radiale de frette, est inférieure ou égale à 7 mm, lesdites rondelles étant empilées les unes sur les autres autour du rotour (1) pour former un cylindre creux assemblé par emmanchement thermique autour du rotor, soit d'un enroulement sous tension d'une ou plusieurs bandes (9) ayant une épaisseur inférieure ou égale à 1 mm, pour former plusieurs spires, superposées déterminant une épaisseur de frette inférieure ou égale à 7 mm, les rondelles ou bandes étant réalisées en un matériau écroui de haute limite élastique supérieure à 100 daN/mm$^2$, et exerçant sur le rotor, et notamment les aimants, une précontrainte suffisamment importante pour empêcher, lors de la vitesse maximale de la rotation du rotor, la possibilité géométrique d'un décollement des aimants d'avec la surface du rotor qui les porte.

2. Machine selon la revendication 1, caractérisée en ce que la limite élastique du matériau écroui est au moins égale à 140 daN/mm$^2$.

3. Machine selon l'une des revendications 1 et 2, caractérisée en ce que le matériau métallique est un matériau dénommé Phynox et constitué d'un alliage de l'ordre de 40% Co, 20% Cr, 16% Si, 7% Mo et contenant également du fer.

4. Machine selon l'une des revendications 1 à 3, caractérisée en ce que l'épaisseur de la rondelle, dans son plan, est de 0,5 mm.

5. Machine selon l'une des revendications 1 à 4, caractérisée en ce que la largeur radiale de rondelle est de 3 à 4 mm.

6. Machine selon l'une des revendications 1 à 3, caractérisée en ce que l'épaisseur de la bande est de l'ordre de 0,1 mm.

7. Machine selon l'une des revendications 1, 3 et 6, caractérisée en ce que l'épaisseur de la frette, constituée de l'enroulement de la ou des bandes, est de 3 mm.

8. Procédé de fabrication d'un rotor de machine selon l'une quelconque des revendications 1 à 5, caractérisé en ce que l'on réalise, à partir d'une bande d'un matériau métallique amagnétique écroui à froid, une pluralité de rondelles par découpage ou estampage, que l'on refroidit le rotor tandis que l'on chauffe les rondelles, puis on monte les rondelles sur le rotor pour réaliser un empilage de rondelles et on laisse les températures s'équilibrer.

9. Procédé selon la revendication 8, caractérisé en ce que les rondelles sont empilées à l'avance pour former un cylindre creux.

10. Procédé selon la revendication 9, caractérisé en ce que le cylindre creux formé par l'empilage des rondelles subit préalablement une rectification intérieure.

11. Procédé de fabrication d'un rotor de machine selon l'une quelconque des revendications 1 à 3, 6 et 7, caractérisé en ce que l'on écrouit une bande de métal, qu'on fixe une extrémité de la bande sur le rotor, qu'on enroule la bande sur une certaine distance sans traction pour recouvrir la génératrice de démarrage sur laquelle la bande est initialement fixée, après quoi on continue à effectuer l'enroulement de la bande sous traction de façon à assurer l'effort de freinage, en retenant la bande, pour obtenir un nombre de tours ou spires désiré en maintenant la précontrainte, après quoi on fixe la partie de bande devant former l'extrémité externe de la bande enroulée.

**Patentansprüche**

1. Elektrische Maschine mit Magneten im Läufer für sehr hohe Drehzahlen, insbesondere Maschine, deren Magnete am Läufer durch Löten oder Klebung befestigt sind und bei der die Magnete von einer zylindrischen Armierung geringer Dicke umgeben sind, die eine Hülle bildet und auf die darunterliegenden Magnete eine Vorspannkraft ausübt, wobei die Armierung aus einem nicht-magnetischen metallischen Material besteht, dadurch gekennzeichnet, dass zur Erzielung einer sehr geringen radialen Dicke die Armierung entweder aus einem Stapel von Ringen (4) besteht, deren Dicke in ihrer Ebene gleich oder kleiner als 1 mm ist und deren radiale Grösse, die die radiale Dicke der Armierung bestimmt, kleiner oder gleich 7 mm ist, wobei die Ringe um den Läufer (1) aneinanderliegend angeordnet sind, um einen Hohlzylinder zu bilden, der durch Wärmeschrumpfung um den Läufer angebracht ist, oder aus einer Umwicklung unter Spannung aus mehreren Bändern (9) besteht, die eine Dicke von 1 mm oder weniger aufweisen, um mehrere übereinanderliegende Windungen zu bilden, die eine Dicke der Armierung von 7 mm oder weniger bilden, wobei die Ringe oder Bänder aus einem kaltgereckten Material hoher Elastizitätsgrenze von mehr als 100 daN/mm$^2$ bestehen und auf den Rotor und insbesondere auf die Magnete eine ausreichend hohe Vorspannung ausüben, um bei dre Maximaldrehzahl des Läufers die geometrische Möglichkeit einer Loslösung der Magnete von der Oberfläche des sie tragenden Läufers zu verhindern.

2. Maschine nach Anspruch 1, dadurch gekennzeichnet, dass die Elastizitätsgrenze des kaltgereckten Materials wenigstens gleich 140 daN/mm$^2$ beträgt.

3. Maschine nach einem der Ansprüche 1 und 2, dadurch gekennzeichnet, dass das metallische Material ein mit Phynox bezeichnetes Material ist und aus einer Legierung aus etwa 40% Co, 20% Cr, 16% Si, 7% Mo besteht und weiterhin Eisen enthält.

4. Maschine nach einem der Ansprüche 1 bis 3, dadurch gekennzeichnet, dass die Dicke des Rings in seiner Ebene 0,5 mm beträgt.

5. Maschine nach einem der Ansprüche 1 bis 4, dadurch gekennzeichnet, dass die radiale Dicke des Rings 3 bis 4 mm beträgt.

6. Maschine nach einem der Ansprüche 1 bis 3, dadurch gekennzeichnet, dass die Dicke des Bandes in der Grössenordnung von 0,1 mm liegt.

7. Maschine nach einem der Ansprüche 1, 3 und 6, dadurch gekennzeichnet, dass die Dicke der Armierung, die aus der Umwicklung aus dem Band oder den Bändern besteht, 3 mm beträgt.

8. Verfahren zur Herstellung eines Maschinenläufers nach einem der Ansprüche 1 bis 5, dadurch gekennzeichnet, dass man aus einem Band aus einem kaltgereckten, metallischen, nicht-magnetischen Material durch Stanzen oder Schmieden mehrere Ringe herstellt, dass man den Läufer kühlt, während man die Ringe erwärmt, dann die Ringe auf dem Läufer anbringt, um einen Ringstapel auszubilden und man dan die Temperaturen sich angleichen lässt.

9. Verfahren nach Anspruch 8, dadurch gekennzeichnet, dass die Ringe zuvor aneinandergefügt werden, um einen Hohlzylinder auszubilden.

10. Verfahren nach Anspruch 9, dadurch gekennzeichnet, dass der durch Stapelung der Ringe ausgebildete Hohlzylinder im voraus eine innere Schleifbehandlung erfährt.

11. Verfahren zum Herstellen eines Maschinenläufers nach einem der Ansprüche 1 bis 3, 6 und 7, dadurch gekennzeichnet, dass man ein Metallband kaltreckt, man ein Ende des Bandes auf dem Rotor befestigt, man das Band über eine gewisse Distanz ohne Zug umwickelt, um die Anfangsmantellinie zu bedecken, auf der das Band anfänglich befestigt ist, wonach man den Umwicklungsvorgang mit dem Band unter Zug derart fortsetz, dass eine Bremskraft sichergestellt wird, wobei man das Band festhält, um eine gewünschte Anzahl von Schlägen oder Windungen zu erhalten, wobei die Vorspannung aufrechterhalten wird, wonach man den Abschnitt des Bandes befestigt, der das äussere Ende des umwickelten Bandes bilden soll.

## Claims

1. Turning machine with magnets in the rotor, intended to turn at very high speeds, in particular a machine of which the magnets are fixed to the rotor by brazing or sticking, and of which the magnets are surrounded by a cylindrical ring of small thickness, forming a sleeve and exerting a prestress on the underlying magnets, the said ring being produced from a non-magnetic metallic material, characterised in that, with the aim of possessing a very small radial thickness, the ring is constituted either by a stack of washers (4), the thickness of which, in their plane, is less than or equal to 1 mm, and the radial width of which determining the radial thickness of the ring is less than or equal to 7 mm, the said washers being stacked one over the other around the rotor (1) to form a hollow cylinder assembled by thermal shrinking around the rotor, or the ring is constituted by a winding under tension of one or more bands (9) having a thickness less than or equal to 1 mm, to form several turns, superposed, determining a ring thickness less than or equal to 7 mm, the washers or bands being produced from a cold-rolled material of high elastic limit greater than 100 daN/MM², and exerting on the rotor, and in particular the magnets, a sufficiently great prestress to prevent, at the maximum speed of rotation of the rotor, the geometric possibility of the magnets detaching from the surface of the rotor which carries them.

2. Machine according to claim 1, characterised in that the elastic limit of the cold-rolled material is at least equal to 140 daN/mm².

3. Machine according to one of claims 1 and 2, characterised in that the metallic material is a material named Phynox and constituted by an alloy in the order of 40% Co, 20% Cr, 16% Si, 7% Mo and also containing iron.

4. Machine according to one of claims 1 to 3, characterised in that the thickness of the washer, in its plane, is 0,5 mm.

5. Machine according to one of claims 1 to 4, characterised in that the radial width of the washer is from 3 to 4 mm.

6. Machine according to one of claims 1 to 3, characterised in that the thickness of the band is in the order of 0.1 mm.

7. Machine according to one of claims 1, 3 and 6, characterised in that the thickness of the ring, constituted by the winding of the band or bands, is 3 mm.

8. Method of manufacture of a rotor of a machine according to any one of claims 1 to 5, characterised in that, from a band of a cold-rolled non-magnetic metallic material a plurality of washers are produced by cutting or stamping, that the rotor is cooled whilst the washers are heated, then the washers are mounted on the rotor to create a stack of washers, and the temperatures are allowed to balance out.

9. Method according to claim 8, characterised in that the washers are stacked in advance to form a hollow cylinder.

10. Method according to claim 9, characterised in that the hollow cylinder formed by the stacking of the washers previously undergoes an interior rectification.

11. Method of manufacture of a rotor of a machine according to any one of claims 1 to 3, 6 and 7, characterised in that a band of metal is cold-rolled, that one end of the band is fixed on the rotor, that the band is wound over a certain distance without traction to cover the starting generator on which the band is initially fixed, after which one continues to carry out the winding of the band unter traction so as to ensure the braking stress, retaining the band, to obtain a desired number of turns or spires, maintaining the prestress, after which the part of the band is fixed which is to form the external end of the wound band.

*Fig. 1*

*Fig. 2*

*Fig. 3*

*Fig. 4*

7

Fig.5

Fig.6

Fig.7

Fig.8

Fig.9